# EUROPEAN PATENT APPLICATION

(11) **EP 2 104 346 A1**
(43) Date of publication of application: **23.09.2009**
(21) Application number: 07845808.0
(22) Date of filing: 05.12.2007
(51) Int. Cl.: H04N 7/16

(54) **A METHOD AND SYSTEM FOR PROCESSING BROADCAST SIGNAL AND A RECEIVING TERMINAL OF BROADCAST SIGNAL**

(30) Priority: 25.12.2006 CN 200610169622
(71) Applicant: Beijing Watchdata System Co. Ltd., Chaoyang District, Beijing 100015 (CN)
(72) Inventor: WANG, Jun, Beijing 100015 (CN); LI, Yong, Beijing 100015 (CN); GAO, Xiang, Beijing 100015 (CN); ZHANG, Dezhi, Beijing 100015 (CN)
(74) Representative: Heinze, Ekkehard
(86) International application number: PCT/CN2007/003447
(87) International publication number: WO 2008/077303

(57) **Abstract**

A method and system for processing broadcast signal and a receiving terminal of broadcast signal used in a conditional access system of the broadcast field, for allowing a transmitting side to broadcast transmission signal to a plurality of terminals over narrowband ,wherein: transmitting side scrambles the signal and transmits it, encrypts a scrambled control word,and transmits encrypted information containing the control word which has been encrypted and scrambled ,wherein the encrypted information is identical; after the terminal selects a secret key for decrypting the scrambled control word based on the encrypted information ,the terminal descrambles the received signal by use of the scrambled control word. With the invention, it is possible to realize conditional access in the narrowband broadcast system, solve the problem of bandwidth being occupied so much when the authorization control information associates with the user in the current manner of conditional access; it is possible to eliminate the weakness about that a data stream can be monitored easily;the operation for managing users is flexible and convenient, and it is possible to protect the users and broadcaster very well.

## Description

### TECHNICAL FIELD

The present invention relates to a conditional access system of the broadcast field, more particularly to a method and system for processing a broadcast signal and a receiving terminal of the broadcast signal.

### BACKGROUND ART

A CA (Conditional Access) system is a core technology for developing a charged TV and broadcast service, that is, the technology ensures a legal user (referred to as an authorized party) is enabled to receive audio and video program and data services while an illegal user can not receive the related signal. The CA of the charged service consists of such two independent key parts as scrambling and descrambling of a signal, and encryption and decryption of received control information, in which descrambling and decryption is undoubtedly an information process with a high requirement for safety.

The CA experienced the development of two generations, in which the feature of the first generation is being based on devices and is generally used for an analog system. In order to implement effective charging of CATV, an analog signal is scrambled at a front end so that the signal can not be watched via a normal TV, and only the users having installed a descrambler can watch the signal normally. Such a system can control the descrambling switch of an individual user by addressing of the front end. The system can implement whole band scrambling and channel scrambling. The implementing method is usually to adopt such technologys as video phase inversion, horizontal sync overlapping, vertical sync overlapping, digital randomized video jitter, and etc., in which manner the signal is usually subject to a loss.

The basic principle of the second generation is a method for encrypting a transmitted stream by using a scrambled CW (control word), where a user side conducts a decryption by using a smart card. Since what is adopted is the digital technology, the signal is not subject to a loss, and both the security and reliability of the system are greatly enhanced. For the scrambling of a transmitted stream, some systems such as the DVB (Digital Video Broadcasting) already have standard(s); the encryption algorithm for the CW generally adopts RSA (proposed by Rivest, Shamir and Adleman) and 3DES (Data Encryption Standard) algorithms. In regard to the encryption mechanism, there exist large differences among different systems, and there are mainly two technologies therefor: one is a password cycling mechanism with the Irdeto system being a representative, and the other is protection using a special algorithm with the NDS system being a representative.

In the first generation CA system, since the key mechanism of the system depends on devices and a descrambler, the signal can be cracked and copied easily. As for the second generation, since the encrypting system, the key system and the devices are separated from each other, and the security for encryption and decryption is provided relying on a smart card so as to ensure the safety of the system, the crack difficulty is enhanced to some extent.

However, there exists a common disadvantage in all the above mentioned schemes adopted currently. Due to the separation of the descrambling device and the decrypting device, the data stream of the communication interface between the smart card and the descrambler may be monitored, thus conducting attacks in the form of replay or a false card. The CATV attack case occurred currently is just implemented by using this means. Meantime, while a set-top box has a descrambling function attached thereto, the scrambling rule is generally not prescribed specifically, and is defined by respective manufacturer, thus being harmful to the implementation of the large-scale production of set-top boxes.

Meantime, in the design of the key mechanism of the second generation CA system, different terminals use different keys, and since the programs customized by different terminals are different, the front end needs to generate different authorization control information for each terminal. For such a design, although the system security is enhance to some extent, the price to pay is that the amount of the authorization control information increases along with the increase of the number of users, which adds the load of the front end, occupies a lot of bandwidth and lowers the efficiency of the system. While such a key system can be adapted to the CATV and the cable network with sufficient bandwidth and relatively small amount of users, obviously, the mechanism of the second generation CA system can not be meet the requirement of the wireless broadcast system in the practical case that the wireless broadcast system has a limited bandwidth and the amount of the potential users is enormous.

### SUMMARY OF INVENTION

The present invention provides a method and system for processing a broadcast signal and a receiving terminal of the broadcast signal, for solving the problem in the prior art that, since it is unable to overcome the difficulty that the load of a front end is greatly added and a lot of bandwidth is occupied along with the increase of the amount of users in the management of authorization control information, it is incapable of implementing a CA service in a narrowband broadcast.

The present invention provides a method for processing a broadcast signal, for a transmitting end to broadcast and transmit signals to a plurality of terminals over a narrow band, the technical solution comprising the steps of:
by a transmitting end, transmitting a signal after scrambling it, encrypting a scrambling CW, and transmitting encrypted information containing the encrypting and scrambling CW, wherein the encrypted information is the same information; and
by a terminal, decrambling the received signal after selecting a decryption key based on the encrypted information to decrypt the scrambling CW.

Preferably, the key is preset in the terminal.

Preferably, there are at least two kinds of the key, and the terminal selects the decryption key based on the encrypted information.

Preferably, there is further comprised the step of:
inquiring data information of a user to which each terminal belongs after or before the decryption of the scrambling CW, and conducting decryption or descrambling control based on the inquiry result by the terminal.

Preferably, the data information of the user includes user usage authority and/or a user usage period and/or user ID information.

The present invention further provides a receiving terminal using a method for processing a narrowband broadcast signal, comprising a signal receiver and a signal processor. The technical solution further comprises a decrypting and descramblilng module connecting to the signal receiver and the signal processor, for being input thereinto the scrambled signal and encrypted information containing an encrypting and scrambling CW received by the signal receiver, decrypting the scrambling CW by using a same key based on the encrypted information, and outputting the descrambled signal processed by the signal processor after descrambling the received signal.

Preferably, the decrypting and descrambling module comprises a data communication interface, a data memory, a password processor and a descrambler as follows:
a data communication interface connected with the signal receiver and the signal processor, for being input thereinto a scrambled signal and the encrypted information of the scrambling CW received by the signal receiver and outputting a descrambled signal processed by the signal processer;
a data memory for storing a key;
a password processor connected with the data communication interface, the data memory and the descrambler, for decrypting a scrambling CW by using the key in the data memory based on the encrypted information input through the data communication interface, and sending the scrambling CW to the descrambler;
a descrambler connected with the password processor and the data communication interface, for descrambling the scrambled signal based on the scrambling CW transmitted by the password processor, and outputting the descrambled signal via the data communication interface.

Preferably, the data communication speed of the data communication interface is greater than the data communication speed at which the signal processor processes a signal.

Preferably, the data communication interface is a USB interface, a multi-media storage card interface or a secure digital I/O interface.

Preferably, there are at least two kinds of the key, and the key is selected by the password processor based on the encrypted information.

Preferably, there is further comprised a user data managing unit as follows, wherein the data memory is further used for storing user data information;
the user data managing unit for inquiring data information of a user to which each terminal belongs after or before the passward processor decrypts the scrambling CW, and conducting decryption or descrambling control based on the inquiry result.

Preferably, the user data managing unit is further used for inquiring such user data information as usage authority and/or a usage period and/or ID information of a user to which the terminal belongs in the data memory.

Preferably, the user data managing unit is further used for inquiring the user data information of the e-wallet of a user to which the terminal belongs in the data memory.

Preferably, there is further comprised a storage operating unit connected with the data memory, for modifying data stored in the data memory.

Preferably, the storage operating unit modifies data stored in the data memory through a smart card interface, a multi-media storage card interface, a secure digital I/O interface, a data line interface or an Internet interface.

The present invention further provides a system for procesing a broadcast signal, comprising a transmitting end for broadcasting and transmitting signals to a plurality of terminals over a narrow band, wherein in the technical solution the terminal comprises a decrypting and descrambling module, wherein:
the transmitting end transmits a signal after scrambling it, encrypts a scrambling CW, and transmits encrypted information containing the encrypting and scrambling CW, wherein the encrypted information is the same information; and
the decrypting and descrambling module decrambles the received signal after selecting a decryption key based on the encrypted information to decrypt the scrambling CW.

Preferably, the decrypting and descrambling module comprises a data communication interface, a data memory, a password processor and a descrambler as follows:
a data communication interface connected with the signal receiver and the signal processor, for being input thereinto a scrambled signal and the encrypted information of the scrambling CW received by the signal receiver and outputting a descrambled signal processed by the signal processer;
a data memory for storing a key;
a password processor connected with the data communication interface, the data memory and the descrambler, for decrypting a scrambling CW by using the key in the data memory based on the encrypted information input through the data communication interface, and sending the scrambling CW to the descrambler;
a descrambler connected with the password processor and the data communication interface, for descrambling the scrambled signal based on the scrambling CW transmitted by the password processor, and outputting the descrambled signal via the data communication interface.

Preferably, there are at least two kinds of the key, and the key is selected by the password processor based on the encrypted information.

Preferably, there is further comprised a user data managing unit as follows, wherein the data memory is further used for storing user data information;
the user data managing unit for inquiring data information of a user to which each terminal belongs after or before the passward processor decrypts the scrambling CW, and conducting decryption or descrambling control based on the inquiry result.

Preferably, the user data managing unit is further used for inquiring such user data information as usage authority and/or a usage period and/or ID information of a user to which the terminal belongs in the data memory.

The advantagous effects of the present invention are as follows:
Since the narrowband broadcast system has the deficiency that it has limited bandwidth, although the amount of the potential users are enormous, the prior art can not overcome the fact that, during the management of the authorization control information, along with the increase of the amount of users, the load of the front end is greatly increased, a lot of bandwidth is occupied, and the system efficiency is low. Thus, although it is desired to ba able to implement the CA service for the enoromous user group, it has been unable to seek a technical solution. By using the present invention, the CA system service in the narrowband broadcast system can be implemented.

Since, in the present invention, broadcasts are made to all terminals by using a same encrypted information, and all terminals decrypt the scrambling CWs by using a same key, the problem is solved that the prior art uses different bandwidth needed for information management and transmission for each user, meantime the manner of using a transmitting end to manage a user in the prior art is changed to the manner that the management for a user is mainly established at a terminal end, the security requirement of CA is meeted by enhancing the security of the terminal end, thus solving the problem of bandwidth occupation due to the management for users, and implementing a CA service for an enormous amount of narrowband broadcast users. Although, in the present invention, the use of a same key for decryption seems to lower the security of CA, only by this way, the present invention solves the problem that the prior art can not be applied to the management of narrowband broadcast users, and achieves an unexpected effect. Meantime, the present invention transfers the security management to the terminal end, so substantially, not only the security requirement of CA can still be meeted, but also the management for terminals in the present invention is more flexible and convenient, and at the same time the security of CA can also be enhanced continuously by using technical progress.

After the management for a user is more concentrated at the terminal end, the terminal end can be improved continuously by using quickly changing technical progress. For example, an embodiment of the present invention discloses an example that a security chip of modern semiconductor secuirty technique is used to greatly enchance the security of the terminal end. In the example, by using the characteristic of high integration of the security chip, a disadvantage is eliminated that the data stream at the interface between a smart card and a descrambler can be monitored, the replay and false card attach due to the disadvantage is avoided, and meantime when the present invention is implemented by using the security chip, the chip can be made to be a universal device that can be produced in bulk.

Meantime, it can be seen from the embodiment of the present invention based on the implementation of the semiconductor technique that the present invention can have characteristics of a high integration and a small volume, and can be widely applied in terminals such as mobile phones of various wireless broadcast system. Further, by setting a safe memory in the security chip to protect a key and sensitive data, the present invention can provide a protection mechanism at a hardware level, enabling the security of the system fully meet the security requirement of a commercial system.

The present invention can further provide a management function for data, thus can further strengthen the management for user data information in the process of CA, and solve the usage authority and usage period of a user, such as by using a built-in an e-wallet, a time manager and etc. Therefore, the present invention can perform descrambling, decryption and billing control processes on a narrowband broadcast signal, change the characteristic of front-end control of the traditional CA system, and manage the CA service for a user by using the e-wallet and the time manager in the security chip of the terminal.

### BRIEF INTRODUCTION TO DRAWINGS

Fig. 1 is a schematic diagram of the data flow of a transmitting end and a terminal in the process of a method for processing a narrowband broadcast signal according to an embodiment;
Fig. 2 is a schematic diagram of the implementing flow of the method for processing a narrowband broadcast signal according to the embodiment;
Fig. 3 is a schematic diagram of the structure of a receiving terminal using the method for processing a narrowband broadcast signal according to the embodiment;
Fig. 4 is a schematic diagram of the structure of the receiving terminal containing a security chip according to the embodiment;
Fig. 5 is a schematic diagram of the flow of charging data processing of the receiving terminal according to the embodiment; and
Fig. 6 is a schematic diagram of the structure of system for processing a narrowband broadcast signal according to the embodiment.

### BEST MODES FOR CARRYING OUT THE INVENTION

Embodiments of the present invention will be explained below in conjunction with the drawings.

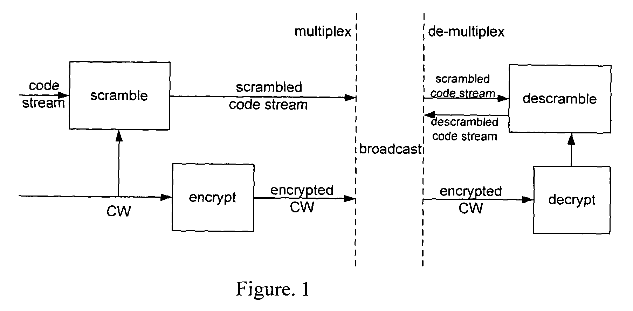

Fig. 1 is a schematic diagram of the data flow of a transmitting end and a terminal in the process of a method for processing a narrowband broadcast signal. As shown in Fig. 1, a code stream is transmitted after being scrambled, a scrambling CW is transmitted through an encrypted information and the scrambled code stream, and after receiving the scrambling CW, a terminal decrypts it to obtain a new scrambling CW, and decrypts the code stream based on the new scrambling CW.

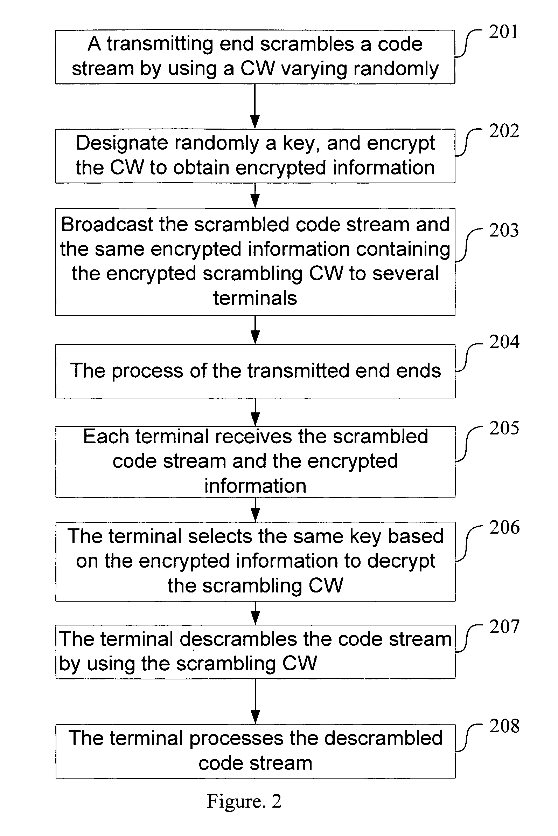

The implementation of the above procedure in the present invention will be described below. Fig. 2 is a schematic diagram of the implementing flow of the method for processing a narrowband broadcast signal. As shown in Fig. 2, the implementing steps are as follows:
Step 201: the transmitting end scrambles the code stream by using a ramdomly changing CW;
Step 202: a key is designated ramdomly, and the CW is encrypted to obtain encrypted information;
Step 203: the scrambled code stream and the same encrypted information containing the encrypted scrambling CW to several terminals;
Step 204: the processing of the transmitting end finishes;
Step 205: each terminal receives the scrambled code stream and the encrypted information;
Step 206: the terminal selects a same key based on the encrypted information to decrypt the scrambling CW;
Step 207: the terminal descrambles the code stream by using the scrambling CW; and
Step 208: the terminal processes the descrambled code stream.

It can be seen from the embodiment that the encrypted information obtained after encrypting the scrambling CW is the same, and likewise, when the terminal selects a key based on the same encrypted information, what is obtained is also the same key.

There are involved three kinds of data in the data transmitted from the transmitting end, in which the first is a code stream scrambled by using a CW, and the second is the ciphertext of the scrambling CW. In a preferred embodiment, there is further contained a third kind of information for providing a key used for selecting the scrambling CW, as well as some other fee information and terminal management information, such as key update information, time information, billing control information and etc. The second and the third is different therein, and the third data information can be very simple, e.g., several bits or a byte is sufficient. The second data varies depending on the size of the key, such as 8, 16 and 24 bytes. The encrypted information in the embodiment contains the second data which is scrambling CW ciphertext data and the third data.

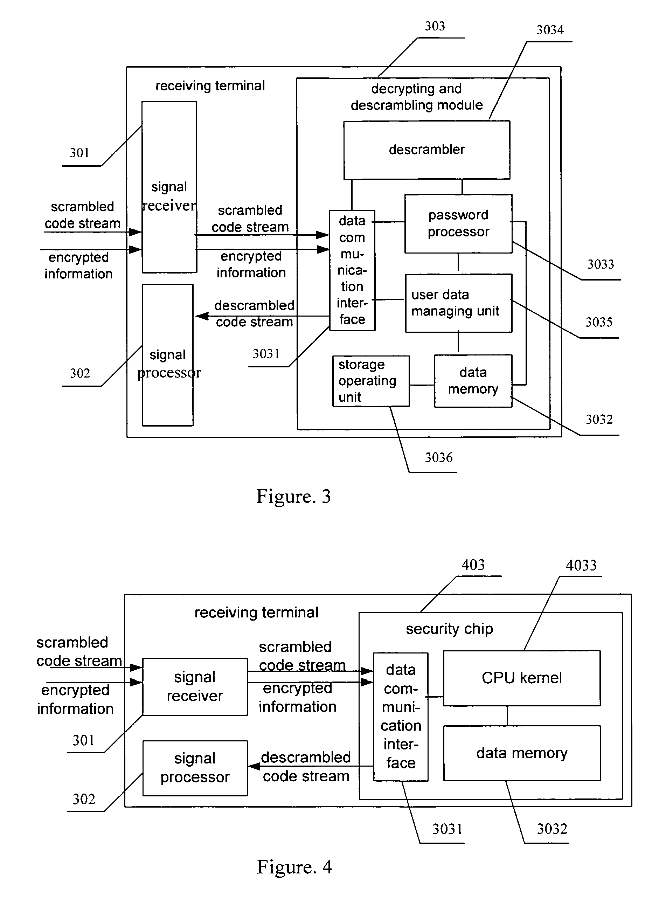

Based on the above invention conception, the present invention provides a receiving terminal for implementing reception in the above mentioned method for processing a narrowband broadcast signal, and the receiving terminal is used for processing a signal code stream when the transmitting end transmits the same encrypted information. Fig. 3 is a schematic diagram of the structure of a receiving terminal using the method for processing a narrowband broadcast signal. A specific embodiment of the present terminal will be described below in conjunction with Fig. 3.

As shown in the figure, the receiving terminal comprises a signal receiver 301, a signal processor 302, a decrypting and descrambling module 303 which is connected with the signal receiver 301 and the signal processor 302, respectively. The operational relation of the modules is as follows: the signal processor 302 receives a scrambled signal and the encrypted information of a scrambling CW, which is then input into the decrypting and descrambling module 303; and the decrypting and descrambling module 303 decrypts out the scrambling CW by using the same key based on the encrypted information, descrambles the received signal by using the CW, and outputs the descrambled signal to the signal processor 302.

In the embodiment, the decrypting and descrambling module needs to have a data communication interface for data input and output, further needs to have a data storage capability, and meantime needs to have a data processing capability for computing data.

In the embodiment, the decrypting and descrambling module may comprise a data communication interface 3031, a data memory 3032, a password processor 3033, and a descrambler 3034. The structural relation and operation relation of the modules in the embodiment are as follows:
The data communication interface 3031 conneced with the signal receiver 301 and the signal processor 302, respectively, is used for being input thereinto the scrambled signal received by the signal receiver and the encrypted information containing the scrambling CW, and outputting the scarmbled siganl processed by the signal processor;
The data memory 3032 is used for storing a key;
The password processor 3033 connected with the data communication interface 3031, the data memory 3032 and the descrambler 3034 is used for selecting a key in the data memory based on the encrypted information input through the data communication interface so as to decrypt out a scrambling CW, and transmits the scrambling CW to the descrambler;
The descrambler 3034 connected with the password processor 3033 and the data communication interface 3031 is used for decrambling the scrambled signla based on the scrambling CW transmitted by the password processor, and outputting the descrambled siganl via the data communication interface;
In an preferred embodiment, there may be further comprised a user data managing unit 3035, while the data memory 3032 is further used for storing user data information;
The user data managing unit may be used for inquiring the data information of the user to which the terminal belongs in the data memory before or after the password processor decrypts out the scrambling CW, and conducting decrypting or descrambling control based on the inquiry result. What is inquired is such user data information as user usage authority, a user usage period and etc.

In an preferred embodiment, there may be comprised a storage operating unit 3036 for modifying the data stored in the data memory. The storage operating unit can modify the data stored in the data memory through a smart card interface, a multimedia storage card interface, a secure digital I/O interface, a data line interface or an Internet interface.

It can be seen from the above embodiments that the present invention may take the modern semiconductor security technology as an assurance on a receiving terminal and adopts a new type of key mechanism design; by integrating a security chip in the terminal, all the terminals use a same key; and, by descrambling and decrypting a broadcast signal in the device incorporating the semiconductor security technology, it is able to change the characteristic of the front end control of the traditional CA system, and further enchance the security of the CA service by using the safe device of the terminal. This can not only solve the bandwidth occupation problem of encryption authority information and implement the requirements regardless of users, but also further eliminate the disadvantage that the data stream at the interface between a smart card and a descrambler can be monitored, and avoid replay and false card attack due to this. Anoher benefit is the receiving terminal can be made to be a universal device that can be produced in bulk.

The embodiment of the receiving terminal of the present invention will be further described below by using an example of a security chip having functions of data communication, data storage and data processing.

Fig. 4 is a schematic diagram of the structure of the receiving terminal containing a security chip. As shown in the figure, the receiving terminal comprises:
A signal receiver 301, a signal processor 302 and a security chip 403 which comprises a data communication interface 3031, a data memory 3032 and a CPU kernel 4033.

In the embodiment, after the signal receiver 301 receives a scrambled signal code stream, the scrambled signal code stream is input into the security chip 403 through the data communication interface 3031, and after the processing of the security chip completes, a descrambled signal code stream is output to the signal processor 302.

In the security chip 403, when the scrambled signal code stream is input through the data communication interface 3031, the CPU kernel 4033 reads such data as a key stored in the data memory 3032, which is decrypted to obtain a scrambling CW, and descrambles the code stream by using the scrambling CW, and outputs the code stream through the data communication interface 3031.

First, the related design content of the security chip used in the embodiment will be described. In the embodiment, a method for descrambling a broadcast signal code stream and decrypting a CW is performed on a security chip, the data communication interface of the security chip may be connected and communicate with the receiving terminal through such high speed interface as a USB interface, an MMC (Multi Media Card), an SDIO (Secure Digital Input Output) and etc., which is determined by the characteristc of large traffic code stream I/O. Usually, the code stream rate that can be watched normally currently reaches 500K bits/s. With the addition of the transmission of other information, and considering the future enhancement of the watching quality, the communication speed of the high speed interface is about over 1M bits/s. In the currently used the technology, all USB, MMC and SDIO interfaces can satisfy this requirement.

When the encrypted information is transmitted to the terminal, the security chip selects a key and an algorithm based on the prompt of the encrypted information, and decrypts a CW. The key of the security chip may be stored in advance in the data memory of the security chip, the key is shared by a transmitting front end, and all the security chips use the same key and algorithm. In consideration of the security, in the embodiment, a plurality of sets of keys and a plurality of algorithms may also be preset, and each set of keys may be used periodically. That is, a set of key is used in a period, after which a next set of key is used. It is random which of a set of keys is specifically used in a period. The selected key is designated by the encrypted information at the transmitting end. The selection of the algorithm is the same as that of the key, both the key and the algorithm are confidential to the outside, and the key can be updated by way of broadcasting. In the preferred embodiment, a plurality of sets of keys can be set, and the purpose of keeping a key confidential and updating the key is also to strengthen the security of the system, increase the difficulty for the terminal to crack the key, and put an end to the potential security hazard brought by the leakage of the key and the algorithm. The key and algorithm are identical for all the security chips, in order to meet the requirements of the special transmission form under the condition that the amount of broadcast users is enormous, the downlink bandwidth is limited and there in no a feedback channel, reduce the bandwidth occupied by CA as far as possible, and serve more people. The decrypted CW is generated periodically and randomly by the transmitting front end.

In the embodiment, taking the assumption that 10 sets of keys for decrypting CWs are prestored in the security chip, 5 keys per set and there are 2 kinds of algorithms as an example, it will be described how to ensure consistency of the keys and algorithms for decrypting the CWs of the transmitting front end and the receiving terminal. Assuming that the life cycle of the decrypting keys and algorithms is 10 years, the life cycle of each set of keys is 1 year, that is, the first year uses the first set of keys, the second year uses the second set of keys, and so on. Then the related information will contain the following content: a, b and c, where a indicates which set of keys is used, their numeric area is 1∼20, the initial value thereof is 1 and the value thereof increases over time; b indicates which key of a certain set of keys, its numeric area is 1∼5, and the value thereof is generated randomly; and, c indicates which algorithm is used, its numeric area is 1∼2, and it is generated according to a rule. If a=1, b=3 and c=2, it indicates the third key in the first set and the second algorithm are used to decrypt a CW.

After the security chip decrypts out a CW, a CW descrambling code stream can be used, and the descrambled code stream is transmitted to the signal processor via a high speed interface to be processed.

In the embodiment, the scrambling and descrambling, and the encrypting and decrypting algorithms may be symmetric or asymmetric security algorithms, such as DES, Tri-DES, RSA, AES (Advanced Encryption Standard), ECC (Elliptic curve cryptography), the algorithms issued by the Commercial Password Office and the Bational Password Office, and etc. By being built therein a special algorithm chip, a data co-processor and etc, the security chip can expedite the operation of an algorithm, and ensure the processing of algorithms inside the security chip is high efficient and time-saving and does not influence the realtime watching and listening of audio and video programs and the enjoying of broadcast services. The data memory in the security chip protects the key and sensitive data stored therein, provides a protection mechanism at a hardware level, and ensures the security of the keys and algorithms. Therefore in the embodiment, through the securing of the keys and algorithms and the protection mechanism at a hardware level provided by the security chip, the security of the CA system is enabled to satisfy the security requirement of a commercial system.

Further, in a preferred embodiment, there may be built in the security chip a user data management unit, by which such user data information as the usage authority and usage period of a user to which a terminal belongs is inquired to confirm whether the user has an authority and how long the usage period is for using a received signal code stream. As long as the inquiry meets a condition, the descrambling is conducted, thus further controlling CA. Obviously, the inquiry for user data can be conducted before decrypting out a CW, and when the user data does not meet the condition, the decryption will not be conducted. The data for controlling a user is diversified, e.g., such data information as the amount of money he pays, whether a usage ID is legal, or the usable period in case of not distinguishing IDs and authorities, etc., is checked. The following embodiment is described by taking an e-wallet as an example.

The e-wallet may be bulit in the security chip, in which is stored the time or money limit required for a user to pay a broadcast service. Deducted consideration is also time or money.

Before decrypting out a CW, between decrypting out a CW and descrambling a code stream, or after descrambling a code stream, the consideration corresponding to the present broadcast service is deducted by the security chip from the e-wallet builit in the security chip. The deduction amount of the consideration may be indicated from the related information. In the embodiment, the related information may be either transmitted through a transmitting end, or be preset. For example, the transmitting end may transmit the paid amount of money for the present signal code stream, and can also preset how much money should be paid when how much the code stream is. The process of deducting the consideration may obviously comprise verifying whether the e-wallet has the capability to pay the consideration. If it is able to make the deduction, the process continues, and if not, a prompting message indicating the lack of balance is displayed. Then, in the embodiment, the time and money limit required for paying the broadcast service may be stored, thus modularizing completely on the security chip such fucntions as descrambling a code stream, descrypting out a CW and deducting a fee.

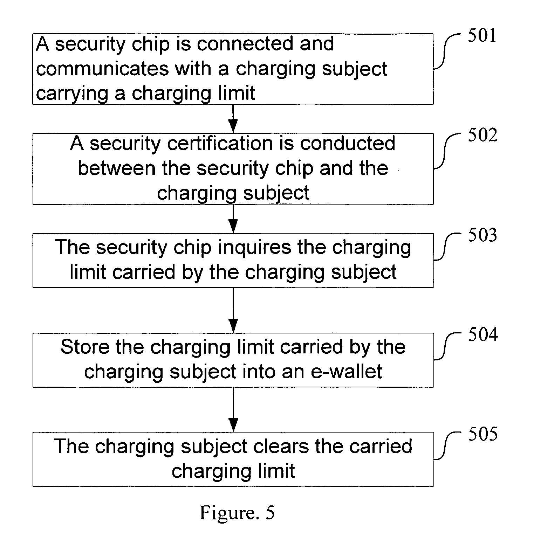

There will be described below that a managemnet of user data information is conducted by using the security chip. In the embodiment, the management of the e-wallet is still taken as an example. Fig. 5 is a schematic diagram of the flow of charging data processing of the receiving terminal. As shown in the figure, the flow comprises the following steps:
Step 501: the security chip is connected and communicates with a charging subject carrying a charging limit via a special channel.
   The charging subject can be in the form of a smart card or the like, and communicates with the security chip via a smart card /MMC/SD interface channel. The charging subject can also be an authoritative institution such as a charging terminal of a bank, and communicates with the security chip via a data line channel. The charging subject can also be an individual account of a network bank, and communicates with the security chip via an Internet and Ethernet interface channel.
Step 502: a secuirty certification is conducted between the security chip and the charging subject.
   The secuirty certification is bidirectional, and the certification key used in the process of secuirty certification may be prestored in the security chip at the factory, and is identical for all the security chips. There may be one, a set or a plurality of sets of certification keys with a plurality of ones per set. The plurality of keys is in consideration of security, and it is determined by the charging subject which key in which set is used specifically to condut a bidirectional certification. The selection of the certification key by the charging subject may either be random, or formulated regularly based on some rule. The certification key is confidential to the outside, and the certification key may be updated by way of broadcast. The purpose of updating the key is also to strengthen charging security, increase the difficulty for the charging subject to crack the key, and put an end to the potential security hazard brought by the leakage of the key. The key is identical for all the security chips, in order to meet the requirements that more charging manners are provided, a lot of charging cards are issued and many-to-many charging occurs between the charging subject and the e-wallet.
   In the process of security certification, the charging subject indicates which certification key in which set is used. It can be determined when the charging subject is generated, or when the charging subject is connected and communicates with the security chip. It can be determined randomly or based on some rule.
   Taking a security chip storing 10 sets of certification keys with 5 ones per set as an example, it is described how a charging subject indicates the security chip to use the certification keys. Assuming the life cycle of the certification keys is 10 years, then the life cycle of each set of keys is 1 year, that is, the first set of key is used in the first year, the second set of keys is used in the second year, and so on. If the charging subject is a charging card in the form of a smart card or the like, only one certification key is stored in the charging card at the factory, it is indicated which in which set the certification key is, and the charging card conducts a safety certification with the security chip by using the certification key; if the charging subject is a charging terminal of an authoritative institution or an individual account of a network bank, there are stored in the charging terminal or the network bank all 10 sets, i.e., 50 certification keys altogether, one of which is chosen by a charging program randomly or regularly as the certification key for the safety certification of the present charging process.
Step 503: the security chip inquires the charging limit carried by the charging subject.
Step 504: the charging limit carried by the charging subject is stored in an e-wallet.
Step 505: the charging subject clears the carried charging limit.

Obviously, the safety certification conducted between the e-wallet, the smart card or similar charging card, the security chip and the charging subject, and the various operations of the e-wallet and the charging subject can meet various standards of finantial institutions, for example, they all conform to the standards of PBOC 1.0 and 2.0 of the People's Bank of China.

In the embodiment, it can be seen that the advantages of the present invention lie in that the receiving terminal is separated from such functions as CA, fee deduction and etc., the security chip accomplishes such functions as CA and fee deduction, and the receiving terminal is connected and communicates with the security chip through a high speed interface, from which, the security of the security chip can be used to enhance the security at each link.

Based on the same invention concept, the present invention further provides a system for processing a narrowband broadcast signal. The embodiment of the present system will be described below in conjunction with the drawings.

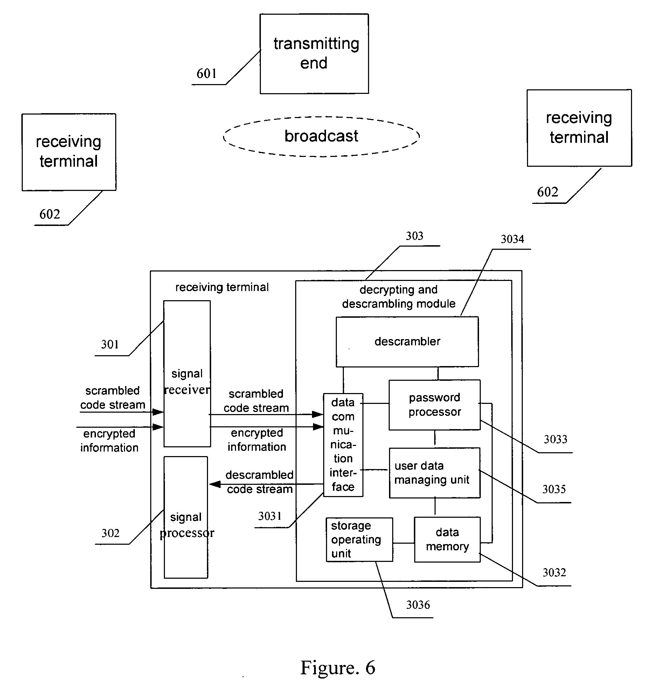

Fig. 6 is a schematic diagram of the structure of the system for processing a narrowband broadcast signal. As shown in the figure, the system comprises a transmitting end 601 and a plurality of receiving terminals 602. Each receiving terminal 602 comprises a decrypting and descrambling module 303. A transmitting end transmits a signal after scrambling it, and transmits a scrambling CW by using the same encrypted information. After the receiving terminal receives the signal transmitted by broadcast, the decrypting and descrambling module decrypts out the scrambling CW by using the same key based on the encrypted information, and then descrambles the received signal.

In the embodiment, the decrypting and descrambling module may comprise a data communication interface 3031, a data memory 3032, a password processor 3033, and a descrambler 3034. In the embodiment, the structural relation and operational relation of the modules are as follows:
The data communication interface 3031 conneced with the signal receiver 301 and the signal processor 302, respectively, is used for being input thereinto the scrambled signal received by the signal receiver and the encrypted information containing the scrambling CW, and outputting the scarmbled siganl processed by the signal processor;
The data memory 3032 is used for storing a key;
The password processor 3033 connected with the data communication interface 3031, the data memory 3032 and the descrambler 3034 is used for selecting a key in the data memory based on the encrypted information input through the data communication interface so as to decrypt out a scrambling CW, and transmits the scrambling CW to the descrambler; and
The descrambler 3034 connected with the password processor 3033 and the data communication interface 3031 is used for decrambling the scrambled signla based on the scrambling CW transmitted by the password processor, and outputting the descrambled siganl via the data communication interface.

In an preferred embodiment, there are at least two kinds of the key, and the key is selected by the password processor based on the encrypted information.

There may be further comprised a user data managing unit 3035, while the data memory 3032 is further used for storing user data information; the user data managing unit may be used for inquiring the data information of the user to which the terminal belongs in the data memory before or after the password processor decrypts out the scrambling CW, and conducting decrypting or descrambling control based on the inquiry result. What is inquired is such user data information as user usage authority, a user usage period and etc.

It can be seen from the above embodiments that the present invention can implement CA in a narrowband broadcast system, and solves the problem that authorization control information and user related requirements occupy a lot of bandwidth under the CA condition currently; by performing descrambling and decrypting operations on a broadcast signal by using such a security technique as the security chip at the receiving terminal, the present invention further eliminates the disadvantage that the existing data stream can be monitored easily, and provides a possibility that universal CA security chips are produced in bulk; and further, the present invention can meantime deduct user's fee or available time or be used in user information management such as the authentication of IDs, and its operation is not only flexible and convenient, but also take a good protection effect on users and broadcast system operators.

The spirit of the present invention lies in that, in the security mechanism of CA, a transmitting end transmits encrypted information which encrypts a scrambling CW by using a same key, a terminal decrypts the scrambling CW by using the same key; thus, it no longer depends largely on controlling through a front end, instead, the security requirements of CA are met by increasing the security at the terminal, thus saving the enormous bandwidth loss brought by the control for the terminal, and enabling CA to be applied in a narrowband broadcast system. Obviously, a person skilled in the art can make various modifications and changes without departing from the spirity and scope of the present invention. Thus, if the modifications and changes of the present invention belong to the scope of the claims and equivalent thereof, the present invention is also intended to encompass the modifications and changes.

## Claims

1. A method for processing a broadcast signal, for a transmitting end to broadcast and transmit signals to a plurality of terminals over a narrow band, **characterized by** comprising the steps of:
by a transmitting end, transmitting a signal after scrambling it, encrypting a scrambling CW, and transmitting encrypted information containing the encrypting and scrambling CW, wherein the encrypted information is the same information; and
by a terminal, decrambling the received signal after selecting a decryption key based on the encrypted information to decrypt the scrambling CW.

2. The method according to claim 1, wherein the key is preset in the terminal.

3. The method according to claim 1, wherein there are at least two kinds of the key, and the terminal selects the decryption key based on the encrypted information.

4. The method according to claim 1, wherein there is further comprised the step of:
inquiring data information of a user to which each terminal belongs respectively after or before the decryption of the scrambling CW, and conducting decryption or descrambling control based on the inquiry result by the terminal.

5. The method according to claim 4, wherein the data information of the user includes user usage authority and/or a user usage period and/or user ID information.

6. A receiving terminal using the method according to claim 1, comprising a signal receiver and a signal processor, **characterized in that** if further comprises a decrypting and descramblilng module connecting to the signal receiver and the signal processor, for being input thereinto the scrambled signal and encrypted information containing an encrypting and scrambling CW received by the signal receiver, decrypting the scrambling CW by using a same key based on the encrypted information, and outputting the descrambled signal processed by the signal processor after descrambling the received signal.

7. The receiving terminal according to claim 6, wherein the decrypting and descrambling module is a data processing device for data communication, data storage and data computation.

8. The receiving terminal according to claim 7, wherein the datda processing device is a security chip.

9. The receiving terminal according to claim 6, wherein the decrypting and descrambling module comprises a data communication interface, a data memory, a password processor and a descrambler as follows:
a data communication interface connected with the signal receiver and the signal processor, for being input thereinto a scrambled signal and the encrypted information of the scrambling CW received by the signal receiver and outputting a descrambled signal processed by the signal processer;
a data memory for storing a key;
a password processor connected with the data communication interface, the data memory and the descrambler, for decrypting a scrambling CW by using the key in the data memory based on the encrypted information input through the data communication interface, and sending the scrambling CW to the descrambler;
a descrambler connected with the password processor and the data communication interface, for descrambling the scrambled signal based on the scrambling CW transmitted by the password processor, and outputting the descrambled signal via the data communication interface.

10. The receiving terminal according to claim 9, wherein the data communication speed of the data communication interface is greater than the data communication speed at which the signal processor processes a signal.

11. The receiving terminal according to claim 10, wherein the data communication interface is a USB interface, a multi-media storage card interface or a secure digital I/O interface.

12. The receiving terminal according to claim 9, wherein there are at least two kinds of the key, and the key is selected by the password processor based on the encrypted information.

13. The receiving terminal according to claim 9, wherein there is further comprised a user data managing unit as follows, wherein the data memory is further used for storing user data information;
a user data managing unit for inquiring data information in the data memory of a user to which each terminal belongs after or before the passward processor decrypts the scrambling CW, and conducting decryption or descrambling control based on the inquiry result.

14. The receiving terminal according to claim 13, wherein, the user data managing unit is further used for inquiring such user data information as usage authority and/or a usage period and/or ID information of a user to which the terminal belongs in the data memory.

15. The receiving terminal according to claim 13, wherein the user data managing unit is further used for inquiring the user data information of the e-wallet of a user to which the terminal belongs in the data memory.

16. The receiving terminal according to claim 9 or 13, wherein there is further comprised a storage operating unit connected with the data memory, for modifying data stored in the data memory.

17. The receiving terminal according to claim 16, wherein, the storage operating unit modifies data stored in the data memory through a smart card interface, a multi-media storage card interface, a secure digital I/O interface, a data line interface or an Internet interface.

18. A system for procesing a broadcast signal, comprising a transmitting end for broadcasting and transmitting signals to a plurality of terminals over a narrow band, **characterized in that** the terminal comprises a decrypting and descrambling module, wherein:
the transmitting end transmits a signal after scrambling it, encrypts a scrambling CW, and transmits encrypted information containing the encrypting and scrambling CW, wherein the encrypted information is the same information; and
the decrypting and descrambling module decrambles the received signal after selecting a decryption key based on the encrypted information to decrypt the scrambling CW.

19. The system according to claim 18, wherein the decrypting and descrambling module comprises a data communication interface, a data memory, a password processor and a descrambler wherein:
a data communication interface connected with the signal receiver and the signal processor, for being input thereinto a scrambled signal and the encrypted information of the scrambling CW received by the signal receiver and outputting a descrambled signal processed by the signal processer;
a data memory for storing a key;
a password processor connected with the data communication interface, the data memory and the descrambler, for decrypting a scrambling CW by using the key in the data memory based on the encrypted information input through the data communication interface, and sending the scrambling CW to the descrambler;
a descrambler connected with the password processor and the data communication interface, for descrambling the scrambled signal based on the scrambling CW transmitted by the password processor, and outputting the descrambled signal via the data communication interface.

20. The system according to claim 19, wherein there are at least two kinds of the key, and the key is selected by the password processor based on the encrypted information.

21. The system according to claim 19, wherein there is further comprised a user data managing unit as follows, wherein the data memory is further used for storing user data information;
a user data managing unit for inquiring data information in the data memory of a user to which each terminal belongs after or before the passward processor decrypts the scrambling CW, and conducting decryption or descrambling control based on the inquiry result.

22. The system according to claim 21, wherein the user data managing unit is further used for inquiring such user data information as usage authority and/or a usage period and/or ID information of a user to which the terminal belongs in the data memory.
